# EUROPÄISCHE PATENTANMELDUNG

(11) **EP 3 616 792 A1**
(43) Veröffentlichungstag der Anmeldung: **04.03.2020**
(21) Anmeldenummer: 18191226.2
(22) Anmeldetag: 28.08.2018
(51) Int. Cl.: B01J 35/00, B01J 23/63, B01D 53/94, F01N 3/08, F01N 3/10

(54) **STICKOXID-SPEICHERKATALYSATOR**

(71) Anmelder: UMICORE AG & CO. KG, 63457 Hanau-Wolfgang (DE)
(72) Erfinder: WOERZ, Anke, 60435 Frankfurt (DE); HOYER, Ruediger, 63755 Alzenau-Hoerstein (DE); BETZ, Benjamin, 63864 Gladbach (DE)

(57) **Zusammenfassung**

Die vorliegende Erfindung betrifft einen Katalysator, der ein Trägersubstrat der Länge L, die sich zwischen einer ersten Stirnfläche a und einer zweiten Stirnfläche b erstreckt, sowie unterschiedlich zusammengesetzte katalytisch aktive Materialzonen A, B und C umfasst, wobei
- Materialzone A Palladium oder Palladium und Platin mit einem Gewichtsverhältnis von Pd : Pt > 1, sowie Ceroxid umfasst,
- Materialzone B Platin oder Platin und Palladium mit einem Gewichtsverhältnis von Pt : Pd > 1, sowie Ceroxid und/oder Cer/Zirkonium-Mischoxid umfasst und
- Materialzone C Platin oder Platin und Palladium mit einem Gewichtsverhältnis von Pt : Pd > 1, sowie ein Trägeroxid umfasst und
wobei
- Materialzone B über Materialzone A angeordnet ist und
- Materialzone C über Materialzone B angeordnet ist und sich ausgehend von der zweiten Stirnfläche b des Trägersubstrats auf einer Länge von 20 bis 60 % der Länge L erstreckt.
sowie eine diesen enthaltende Katalysatoranordnung.

## Beschreibung

Die vorliegende Erfindung betrifft einen Stickoxid-Speicherkatalysator zur Behandlung von Abgasen aus Verbrennungsmotoren.

Das Abgas von Kraftfahrzeugen, die mit mager betriebenen Verbrennungsmotoren, beispielsweise mit Dieselmotoren, betrieben werden, enthält neben Kohlenmonoxid (CO) und Stickoxiden (NOₓ) auch Bestandteile, die aus der unvollständigen Verbrennung des Kraftstoffs im Brennraum des Zylinders herrühren. Dazu gehören neben Rest-Kohlenwasserstoffen (HC), die meist ebenfalls überwiegend gasförmig vorliegen, Partikelemissionen, die auch als "Dieselruß" oder "Rußpartikel" bezeichnet werden. Dabei handelt es sich um komplexe Agglomerate aus überwiegend Kohlenstoffhaltigen Feststoff-Teilchen und einer anhaftenden Flüssigphase, die meist mehrheitlich aus längerkettigen Kohlenwasserstoff-Kondensaten besteht. Die auf den festen Bestandteilen anhaftende Flüssigphase wird auch als "Soluble Organic Fraction SOF" oder "Volatile Organic Fraction VOF" bezeichnet.

Zur Reinigung dieser Abgase müssen die genannten Bestandteile möglichst vollständig in unschädliche Verbindungen umgewandelt werden, was nur unter Einsatz geeigneter Katalysatoren möglich ist.

Rußpartikel können sehr effektiv mit Hilfe von Partikelfiltern aus dem Abgas entfernt werden. Besonders bewährt haben sich Wandflussfilter aus keramischen Materialien. Diese sind aus einer Vielzahl von parallelen Kanälen aufgebaut, die durch poröse Wände gebildet werden. Die Kanäle sind wechselseitig an einem der beiden Enden des Filters verschlossen, so dass erste Kanäle gebildet werden, die an der ersten Seite des Filters offen und auf der zweiten Seite des Filters verschlossen sind, sowie zweite Kanäle, die an der ersten Seite des Filters verschlossen und auf der zweiten Seite des Filters offen sind. Das beispielsweise in die ersten Kanäle einströmende Abgas kann den Filter nur über die zweiten Kanäle wieder verlassen und muss zu diesem Zweck durch die porösen Wände zwischen den ersten und zweiten Kanälen durchfließen. Beim Durchtritt des Abgases durch die Wand werden die Partikel zurückgehalten.
Es ist bekannt, dass Partikelfilter mit katalytisch aktiven Beschichtungen versehen werden können. So beschreibt beispielsweise die EP1820561 A1 die Beschichtung eines Dieselpartikelfilters mit einer Katalysatorschicht, die das Abbrennen der gefilterten Rußpartikel erleichtert.

Ein bekanntes Verfahren zur Entfernung von Stickoxiden aus Abgasen in Gegenwart von Sauerstoff ist die selektive katalytische Reduktion (SCR-Verfahren) mittels Ammoniak an einem geeigneten Katalysator. Bei diesem Verfahren werden die aus dem Abgas zu entfernenden Stickoxide mit Ammoniak zu Stickstoff und Wasser umgesetzt.

Als wesentliche Reaktionswege der SCR-Reaktion wurden die sogenannte "Standard SCR Reaktion" nach der Gleichung (I)

NH₃ + NO + 1/4 O₂ → N₂ + 3/2 H₂O (I)

sowie die sogenannte "schnelle SCR Reaktion" nach der Gleichung (II)

NH₃ + 1/2 NO + 1/2 NO₂ → N₂ + 3/2 H₂O (II)

identifiziert.
Nachdem das Abgas von mager betriebenen Verbrennungsmotoren üblicherweise NO₂ nur in Mengen von ca. 10% des gesamten Stickoxidanteils umfasst, ist es vorteilhaft, zum Beispiel mittels eines vorgeschalteten Oxidationskatalysators seinen Anteil zu erhöhen, um in den Genuss der schnellen SCR Reaktion zu kommen.

Als SCR-Katalysatoren können beispielsweise Eisen- und insbesondere Kupfer-ausgetauschte Zeolithe verwendet werden, siehe zum Beispiel WO2008/106519 A1, WO2008/118434 A1 und WO2008/132452 A2. SCR-Katalysatoren für die Umsetzung von Stickoxiden mit Ammoniak enthalten keine Edelmetalle, insbesondere kein Platin und kein Palladium. In Gegenwart dieser Metalle würde nämlich die Oxidation von Ammoniak mit Sauerstoff zu Stickoxiden bevorzugt ablaufen und die SCR-Reaktion (Umsetzung von Ammoniak mit Stickoxid) ins Hintertreffen geraten. Soweit in der Literatur bisweilen von Platin- bzw. Palladium-ausgetauschten Zeolithen als "SCR-Katalysatoren" die Rede ist, so bezieht sich dies nicht auf die NH₃-SCR-Reaktion, sondern auf die Reduktion von Stickoxiden mittels Kohlenwasserstoffen. Allerdings ist letztgenannte Umsetzung nur wenig selektiv, so dass sie statt "SCR-Reaktion" zutreffender "HC-DeNOx-Reaktion" genannt wird.
Der als Reduktionsmittel verwendete Ammoniak kann durch Eindosierung einer Ammoniakvorläuferverbindung, wie beispielsweise Harnstoff, Ammoniumcarbamat oder Ammoniumformiat, in den Abgasstrang und anschließende Hydrolyse verfügbar gemacht werden.
SCR-Katalysatoren haben den Nachteil, dass sie erst ab einer Abgastemperatur von ca. 180 bis 200°C arbeiten und somit Stickoxide, die in der Kaltstartphase des Motors gebildet werden, nicht umsetzen.

Zur Entfernung der Stickoxide sind neben den SCR-Katalysatoren Stickoxid-Speicherkatalysatoren, für die auch der Begriff "Lean NOx Trap" oder "LNT" üblich ist, bekannt. Deren Reinigungswirkung beruht darauf, dass in einer mageren Betriebsphase des Motors die Stickoxide vom Speichermaterial des Speicherkatalysators vorwiegend in Form von Nitraten gespeichert werden und diese in einer darauf folgenden fetten Betriebsphase des Motors wieder zersetzt und die so freiwerdenden Stickoxide mit den reduzierenden Abgasanteilen am Speicherkatalysator zu Stickstoff, Kohlendioxid und Wasser umgesetzt werden. Diese Arbeitsweise ist beispielsweise in der SAE-Schrift SAE 950809 beschrieben.
Als Speichermaterialien kommen insbesondere Oxide, Carbonate oder Hydroxide von Magnesium, Calcium, Strontium, Barium, der Alkalimetalle, der Seltenerdmetalle oder Mischungen davon in Frage. Diese Verbindungen sind aufgrund ihrer basischen Eigenschaften in der Lage, mit den sauren Stickoxiden des Abgases Nitrate zu bilden und sie auf diese Weise abzuspeichern. Sie sind zur Erzeugung einer großen Wechselwirkungsfläche mit dem Abgas in möglichst hoher Dispersion auf geeigneten Trägermaterialien abgeschieden. Stickoxid-Speicherkatalysatoren enthalten darüber hinaus in der Regel Edelmetalle wie Platin, Palladium und/oder Rhodium als katalytisch aktive Komponenten. Deren Aufgabe ist es einerseits, unter mageren Bedingungen NO zu NO₂, sowie CO und HC zu CO₂ zu oxidieren und andererseits während der fetten Betriebsphasen, in denen der Stickoxid-Speicherkatalysator regeneriert wird, freigesetztes NO₂ zu Stickstoff zu reduzieren.
Moderne Stickoxid-Speicherkatalysatoren sind beispielsweise in EP0885650 A2, US2009/320457, WO2012/029050 A1 und WO2016/020351 A1 beschrieben.

Die in der SAE-Schrift SAE 950809 beschriebene Arbeitsweise, bei der Stickoxide von einem Stickoxid-Speicherkatalysator in einer mageren Betriebsphase des Motors gespeichert und in einer darauf folgenden fetten Betriebsphase wieder freigesetzt werden, wird auch als aktive Stickoxid-Speicherung bezeichnet.
Daneben ist auch ein als passive Stickoxid-Speicherung bekanntes Verfahren beschrieben worden. Dabei werden Stickoxide in einem ersten Temperaturbereich gespeichert und in einem zweiten Temperaturbereich wieder freigesetzt, wobei der zweite Temperaturbereich bei höheren Temperaturen liegt als der erste Temperaturbereich. Zur Durchführung dieses Verfahrens werden passive Stickoxid-Speicherkatalysatoren verwendet, die auch als PNA (für "passive NOx-Adsorber") bezeichnet werden.
Mittels passiver Stickoxid-Speicherkatalysatoren können Stickoxide insbesondere bei Temperaturen unter 200°C, bei denen ein SCR-Katalysator seine Betriebstemperatur noch nicht erreicht hat, gespeichert werden und wieder freigesetzt werden, sobald der SCR-Katalysator betriebsbereit ist. Durch die Zwischenspeicherung der vom Motor emittierten Stickoxide unterhalb von 200°C und deren konzertierter Freisetzung oberhalb von 200°C kann also eine gesteigerte Gesamt-Stickoxid-Umsetzung des Abgasnachbehandlungssystems realisiert werden.

Als passiver Stickoxid-Speicherkatalysator ist auf Ceroxid geträgertes Palladium beschrieben worden, siehe zum Beispiel WO2008/047170 A1 und WO2014/184568 A1, das gemäß WO2012/071421 A2 und WO2012/156883 A1 auch auf einen Partikelfilter beschichtet werden kann.

Moderne und zukünftige Dieselmotoren werden immer effizienter, wodurch auch die Abgastemperaturen sinken. Parallel dazu werden die Gesetzgebungen hinsichtlich des Umsatzes von Stickoxiden kontinuierlich strenger. Dies führt dazu, dass SCR-Katalysatoren alleine nicht mehr ausreichen, um die Stickoxid-Grenzwerte einzuhalten.
Künftige Abgasnachbehandlungssysteme müssen Stickoxide über ein breites Betriebsfenster umsetzen. Sie müssen sowohl in der Kaltstartphase und bei tiefen Temperaturen (beispielsweise bei innerstädtischen Fahrten), als auch bei hohen Temperaturen (beispielsweise während Beschleunigungsphasen und bei Autobahnfahrten) Stickoxide speichern bzw. umsetzen. Prinzipiell können passive Stickoxid-Adsorber wie sie bereits heute Stand der Technik sind, diese Aufgaben bewältigen. Allerdings besteht noch erheblicher Optimierungsbedarf hinsichtlich der temperaturabhängigen Einspeicherung und Freisetzung von Stickoxiden. Im Übrigen sollen solche Katalysatoren auch Kohlenwasserstoffe und Kohlenmonoxid umsetzen.

Die vorliegende Erfindung betrifft einen Katalysator, der ein Trägersubstrat der Länge L, die sich zwischen einer ersten Stirnfläche a und einer zweiten Stirnfläche b erstreckt, sowie unterschiedlich zusammengesetzte katalytisch aktive Materialzonen A, B und C umfasst, wobei
- Materialzone A Palladium oder Palladium und Platin mit einem Gewichtsverhältnis von Pd : Pt > 1, sowie Ceroxid umfasst,
- Materialzone B Platin oder Platin und Palladium mit einem Gewichtsverhältnis von Pt : Pd > 1, sowie Ceroxid und/oder Cer/Zirkonium-Mischoxid umfasst und
- Materialzone C Platin oder Platin und Palladium mit einem Gewichtsverhältnis von Pt : Pd > 1, sowie ein Trägeroxid umfasst und
   wobei
- Materialzone B über Materialzone A angeordnet ist und
- Materialzone C über Materialzone B angeordnet ist und sich ausgehend von der zweiten Stirnfläche b des Trägersubstrats auf einer Länge von 20 bis 60 % der Länge L erstreckt.

In Ausführungsformen der vorliegenden Erfindung umfasst Materialzone A Palladium und kein Platin.
In anderen Ausführungsformen enthält Materialzone A neben Palladium auch Platin, wobei das Gewichtsverhältnis Pd : Pt > 1 ist, also zum Beispiel 20 :1 bis 1,1 : 1 beträgt. Beispiele für das Gewichtsverhältnis Pd : Pt in Materialzone A sind 20 : 1, 12 : 1, 10 : 1, 7 : 1, 6 : 1, 4 : 1, 3: 1, 2: 1 und 1,5: 1. Bevorzugt ist das Gewichtsverhältnis Pd : Pt in Materialzone A 2 : 1 bis 10 : 1.
In Ausführungsformen der vorliegenden Erfindung umfasst Materialzone A Palladium bzw. Palladium und Platin in Mengen von 1,1 bis 2,0 g/l Palladium und 0,1 bis 0,9 g/l Platin, jeweils bezogen auf das Volumen des Trägersubstrates.
Das in Materialzone A enthaltene Ceroxid enthält insbesondere kein Zirkonium und keine anderen Seltenerdelemente, wie zum Beispiel Lanthan oder Neodym. Es handelt sich somit um sogenanntes reines Ceroxid. Bevorzugt dient in Materialzone A das Ceroxid als Träger für das Palladium bzw. das Palladium und das Platin.
In Ausführungsformen der vorliegenden Erfindung umfasst Materialzone A ein Erdalkalioxid, wobei geeignete Erdalkalioxide Magnesiumoxid, Strontiumoxid und Bariumoxid sind. Bevorzugt umfasst Materialzone A Magnesiumoxid.
Materialzone A umfasst Erdalkalioxid bevorzugt in Mengen 50 bis 150 g/l, besonders bevorzugt 80 bis 120 g/l, jeweils bezogen auf das Volumen des Trägersubstrates.
In Ausführungsformen der vorliegenden Erfindung umfasst Materialtone A Titandioxid, insbesondere in Mengen von 1 bis 10 g/l, bevorzugt 4 bis 6 g/l, jeweils bezogen auf das Volumen des Trägersubstrates.

In Ausführungsformen der vorliegenden Erfindung umfasst Materialzone B Platin und kein Palladium.
In anderen Ausführungsformen enthält Materialzone B neben Platin auch Palladium, wobei das Gewichtsverhältnis Pt : Pd > 1 ist, also zum Beispiel 20 :1 bis 1,1 : 1 beträgt. Beispiele für das Gewichtsverhältnis Pt : Pd in Materialzone B sind 20 : 1, 12 : 1, 10 : 1, 7 : 1, 6 : 1, 4 : 1, 3: 1, 2: 1 und 1,5: 1. Bevorzugt ist das Gewichtsverhältnis Pt : Pd in Materialzone B 2 : 1 bis 10 : 1.
In Ausführungsformen der vorliegenden Erfindung umfasst Materialzone B Platin bzw. Platin und Palladium in Mengen von 0,5 bis 1,3 g/l, bevorzugt 0,7 bis 1,0 g/l Platin und 0,05 bis 0,13 g/l, bevorzugt 0,07 bis 0,1 g/l Palladium, jeweils bezogen auf das Volumen des Trägersubstrates.
Sofern Materialzone B Ceroxid umfasst, enthält es insbesondere kein Zirkonium und keine anderen Seltenerdelemente wie Lanthan oder Neodym. Es handelt sich somit um sogenanntes reines Ceroxid.
Materialzone B kann neben oder alternativ zu Ceroxid Cer/Zirkonium-Mischoxid enthalten.
Der Begriff "Cer/Zirkonium-Mischoxid" schließt im Rahmen dieser Anmeldung physikalische Mischungen von Ceroxid und Zirkoniumoxid aus. Vielmehr steht er für "feste Lösungen" mit einem einheitlichen Kristallgitter, bei denen die einzelnen Metalloxide nicht mehr unterschieden werden können oder er steht für Agglomerate aus Ceroxid und Zirkoniumoxid, die kein einheitliches Kristallgitter aufweisen und bei denen Phasen der einzelnen Metalloxide unterschieden werden können.
Das Masseverhältnis von Ceroxid und Zirkoniumoxid ist bei dem in Materialzone B enthaltenen Cer/Zirkonium-Mischoxid insbesondere < 1. Beispielsweise beträgt das Masseverhältnis CeO₂ : ZrO₂ bei 20 : 80 bis 45 : 55, bevorzugt bei 40 : 60.
Bevorzugt dient in Materialzone B das Ceroxid und/oder das Cer/Zirkonium-Mischoxid als Träger für das Platin bzw. das Platin und das Palladium.

In Ausführungsformen der vorliegenden Erfindung umfasst Materialzone C Platin und kein Palladium.
In anderen Ausführungsformen enthält Materialzone C neben Platin auch Palladium, wobei das Gewichtsverhältnis Pt : Pd > 1 ist, also zum Beispiel 20 : 1 bis 1,1 : 1 beträgt. Beispiele für das Gewichtsverhältnis Pt : Pd in Materialzone B sind 20 : 1, 12 : 1, 10 : 1, 7 : 1, 6 : 1, 4 : 1, 3: 1, 2: 1 und 1,5: 1. Bevorzugt ist das Gewichtsverhältnis Pt : Pd in Materialzone B 2 : 1 bis 10 : 1.
In Ausführungsformen der vorliegenden Erfindung umfasst Materialzone C Platin bzw. Platin und Palladium in Mengen von 0,5 bis 1,5 g/l, bevorzugt 0,9 bis 1,2 g/l Platin und 0,05 bis 0,15 g/l, bevorzugt 0.09 bis 0,12 g/l Palladium, jeweils bezogen auf das Volumen des Trägersubstrates.
In Materialzone C sind Platin bzw. Platin und Palladium auf einem Trägeroxid geträgert.
Als Trägeroxid kommen alle dem Fachmann für diesen Zweck geläufigen Materialien in Betracht. Sie weisen eine BET-Oberfläche von 30 bis 250 m²/g, bevorzugt von 100 bis 200 m²/g auf (bestimmt nach DIN 66132) und sind insbesondere Aluminiumoxid, Siliziumoxid, Magnesiumoxid, Titanoxid, sowie Mischungen oder Mischoxide von mindestens zwei dieser Materialien. Bevorzugt sind Aluminiumoxid, Magnesium/Aluminium-Mischoxide und Aluminium/Silizium-Mischoxide. Sofern Aluminiumoxid verwendet wird, so ist es besonders bevorzugt stabilisiert, beispielsweise mit 1 bis 6 Gew.-%, insbesondere 4 Gew.-%, Lanthanoxid.
In Ausführungsformen der vorliegenden Erfindung ist Materialzone C frei von Ceroxid und frei von Cer/Zirkonium-Mischoxid.

Das Trägersubstrat des erfindungsgemäßen Katalysators ist insbesondere ein Durchflusssubstrat, bei dem sich durch poröse Wände getrennte Kanäle der Länge L parallel zwischen den Stirnflächen a und b erstrecken. Die Kanäle der Länge L sind an beiden Enden des Trägersubstrats offen. Durchflusssubstrate sind dem Fachmann bekannt und am Markt erhältlich. Sie bestehen beispielsweise aus Silicium-Carbid, Aluminium-Titanat oder Cordierit.

Alternativ können auch Trägersubstrate verwendet werden, die aus gewellten Blättern aus inerten Materialien aufgebaut sind. Geeignete inerte Materialien sind zum Beispiel faserförmige Materialien mit einem durchschnittlichen Faserdurchmesser von 50 bis 250 µm und einer durchschnittlichen Faserlänge von 2 bis 30 mm. Bevorzugt sind faserförmige Materialien hitzebeständig und bestehen aus Siliziumdioxid, insbesondere aus Glasfasern.
Zur Herstellung solcher Trägersubstrate werden zum Bespiel Blätter aus den genannten Fasermaterialien in bekannter Weise gewellt und die einzelnen gewellten Blätter zu einem zylindrischen monolithisch strukturierten Körper mit den Körper durchziehenden Kanälen geformt. Vorzugsweise wird durch Aufschichten einer Anzahl der gewellten Blätter zu parallelen Schichten mit unterschiedlicher Orientierung der Wellung zwischen den Schichten ein monolithisch strukturierter Körper mit einer kreuzweisen Wellungsstruktur geformt. In einer Ausführungsform können zwischen den gewellten Blättern ungewellte, d.h. flache Blätter angeordnet sein.
Substrate aus gewellten Blättern können direkt mit dem erfindungsgemäßen Katalysator beschichtet werden, vorzugsweise werden sie aber zunächst mit einem inerten Material, zum Beispiel Titandioxid, und erst dann mit dem katalytischen Material beschichtet.

In Ausführungsformen der vorliegenden Erfindung erstrecken sich sowohl Materialzone A, als auch Materialzone B zwischen den Stirnflächen a und b auf der ganzen Länge L des Tragkörpers. Insbesondere liegt Materialzone A direkt auf dem Tragkörper und Materialzone B direkt auf Materialzone A.

Materialzone C erstreckt sich bevorzugt ausgehend von der zweiten Stirnfläche b des Trägersubstrats auf einer Länge von 35 bis 50 % der Länge L. Materialzone C liegt insbesondere direkt auf Materialzone B.

Die Materialzonen A, B und C liegen auf dem Trägersubstrat insbesondere in Form von Beschichtungen vor.

Erfindungsgemäße Katalysatoren können beispielsweise dadurch hergestellt werden, dass wässrige Beschichtungssuspensionen A, B und C hergestellt werden, die jeweils die Bestandteile enthalten, die den Materialzonen A, B und C entsprechen und dass diese sodann nach dem Fachmann geläufigen Methoden, so etwa nach den üblichen Tauchbeschichtungsverfahren bzw. Pump- und Saug-Beschichtungsverfahren auf das Trägersubstrat beschichtet werden.
Nach dieser Methode wird zuerst Materialzone A, dann Materialzone B und zuletzt Materialzone C erzeugt. Nach jedem Beschichtungsschritt kann getrocknet und gegebenenfalls kalziniert werden.

Der erfindungsgemäße Katalysator speichert bei tiefen Temperaturen, insbesondere unterhalb von 160°C Stickoxide ein. Bei diesen Temperaturen ist ein nachfolgender SCR- bzw. SDPF-Katalysator noch nicht aktiv und es kann noch keine Harnstoff-Eindosierung erfolgen. Bei Temperaturen oberhalb von 160°C, d.h. wenn ein nachfolgender SCR- bzw. SDPF-Katalysator bereits aktiv ist, gibt der erfindungsgemäße Katalysator das eingespeicherte Stickoxid wieder frei (sogenannte thermische Regeneration). Es ist also keine kurzzeitige Umstellung des Motors auf Fettbetrieb wie bei aktiven NOx-Speicherkatalysatoren nötig und ein damit einhergehender erhöhter Kraftstoffverbrauch wird vermieden.
Außerdem setzt der erfindungsgemäße Katalysator im Abgas enthaltenes Stickstoffmonoxid zu Stickstoffdioxid um, so dass über einem nachfolgenden SCR- bzw. SDPF-Katalysator die "schnelle SCR-Reaktion" gemäß der oben genannten Reaktionsgleichung (II) ablaufen kann. Schließlich ist der erfindungsgemäße Katalysator auch in der Lage, im Abgas enthaltene Kohlenwasserstoffe, sowie Kohlenmonoxid oxidativ umzusetzen und zeichnet sich dabei durch sehr gute Light-Off-Eigenschaften aus. Der erfindungsgemäße Katalysator weist somit auch die Funktion eines Dieseloxidationskatalysators auf und kann als solcher eingesetzt werden.

Im Vergleich zu bekannten Katalysatoren kann der erfindungsgemäße Katalysator viel besser entschwefelt werden und ist stabiler hinsichtlich des HC/CO Light-Off.

Der erfindungsgemäße Katalysator erlaubt deshalb in Kombination mit einem SCR-Katalysator, Stickoxide über den gesamten Temperaturbereich des Abgases, einschließlich der Kaltstarttemperaturen, wirkungsvoll umzusetzen.

Die vorliegende Erfindung betrifft somit auch eine Katalysatoranordnung, die
a) einen Katalysator, der ein Trägersubstrat der Länge L, die sich zwischen einer ersten Stirnfläche a und einer zweiten Stirnfläche b erstreckt, sowie unterschiedlich zusammengesetzte katalytisch aktive Materialzonen A, B und C umfasst, wobei
   - Materialzone A Palladium oder Palladium und Platin mit einem Gewichtsverhältnis von Pd : Pt > 1, sowie Ceroxid umfasst,
   - Materialzone B Platin oder Platin und Palladium mit einem Gewichtsverhältnis von Pt : Pd > 1, sowie Ceroxid und/oder Cer/Zirkonium-Mischoxid umfasst und
   - Materialzone C Platin oder Platin und Palladium mit einem Gewichtsverhältnis von Pt : Pd > 1, sowie ein Trägeroxid umfasst und
      wobei
   - Materialzone B über Materialzone A angeordnet ist und
   - Materialzone C über Materialzone B angeordnet ist und sich ausgehend von der zweiten Stirnfläche b des Trägersubstrats auf einer Länge von 20 bis 60 % der Länge L erstreckt.
      und
b) einen SCR-Katalysator, der bei Temperaturen oberhalb von 200°C die selektive katalytische Reduktion von Stickoxiden katalysiert,
umfasst.

Der SCR-Katalysator in der erfindungsgemäßen Katalysatoranordnung kann prinzipiell ausgewählt sein aus allen in der SCR-Reaktion von Stickoxiden mit Ammoniak aktiven Katalysatoren, insbesondere aus solchen, die dem Fachmann auf dem Gebiet der Autoabgaskatalyse als gebräuchlich bekannt sind. Dies schließt Katalysatoren vom Mischoxid-Typ ebenso ein, wie Katalysatoren auf Basis von Zeolithen. Während Katalysatoren vom Mischoxid-Typ insbesondere VWT-Katalysatoren auf Basis von V₂O₅, WO₃ und TiO₂ sind, umfassen Katalysatoren auf Basis von Zeolithen insbesondere Übergangsmetall-ausgetauschte Zeolithe.

In Ausführungsformen der vorliegenden Erfindung werden SCR-Katalysatoren, die einen kleinporigen Zeolithen mit einer maximalen Ringgröße von acht tetraedrischen Atomen und ein Übergangsmetall enthalten, verwendet. Solche SCR-Katalysatoren sind beispielsweise in WO2008/106519 A1, WO2008/118434 A1 und WO2008/132452 A2 beschrieben.
Daneben können aber auch groß- und mittelporige Zeolithe verwendet werden, wobei insbesondere solche vom Strukturtyp BEA in Frage kommen. So sind Eisen-BEA und Kupfer-BEA von Interesse.

Besonders bevorzugte Zeolithe gehören den Gerüsttypen BEA, AEI, CHA, KFI, ERI, LEV, MER oder DDR an und sind besonders bevorzugt mit Kobalt, Eisen, Kupfer oder Mischungen aus zwei oder drei dieser Metalle ausgetauscht.

Unter den Begriff Zeolithe fallen hier auch Molsiebe, die bisweilen auch als "zeolithähnliche" Verbindungen bezeichnet werden. Molsiebe sind bevorzugt, wenn sie einem der oben genannten Gerüsttypen angehören. Beispiele sind Silicaaluminiumphosphat-Zeolithe, die unter dem Begriff SAPO bekannt sind und Aluminiumphosphat-Zeolithe, die unter dem Begriff AIPO bekannt sind.

Auch diese sind insbesondere dann bevorzugt, wenn sie mit Kobalt, Eisen, Kupfer oder Mischungen aus zwei oder drei dieser Metalle ausgetauscht sind.

Bevorzugte Zeolithe sind weiterhin solche, die einen SAR (silica-to-alumina ratio)-Wert von 2 bis 100, insbesondere von 5 bis 50, aufweisen.

Die Zeolithe bzw. Molsiebe enthalten Übergangsmetall insbesondere in Mengen von 1 bis 10 Gew.-%, insbesondere 2 bis 5 Gew.-%, berechnet als Metalloxid, also als Fe₂O₃ im Falle Eisen-ausgetauschter Zeolithe und als CuO im Falle Kupfer-ausgetauschter Zeolithe.

Bevorzugte Ausführungsformen der vorliegenden Erfindung enthalten als SCR-Katalysatoren mit Kupfer, Eisen oder Kupfer und Eisen ausgetauschte Zeolithe oder Molsiebe vom Beta-Typ (BEA), Chabazit-Typ (CHA), vom AEI-Typ, vom AFX-Typ oder vom Levyne-Typ (LEV). Entsprechende Zeolithe oder Molsiebe sind beispielsweise unter den Bezeichnungen ZSM-5, Beta, SSZ-13, SSZ-62, Nu-3, ZK-20, LZ-132, SAPO-34, SAPO-35, AIPO-34 und AIPO-35 bekannt, siehe etwa US 6,709,644 und US 8,617,474.

In einer Ausführungsform der erfindungsgemäßen Katalysatoranordnung befindet sich zwischen dem erfindungsgemäßen Katalysator und dem SCR-Katalysator eine Eindosiervorrichtung für Reduktionsmittel.
Die Eindosiervorrichtung kann vom Fachmann beliebig gewählt werden, wobei geeignete Vorrichtungen der Literatur entnommen werden können (siehe etwa T. Mayer, Feststoff-SCR-System auf Basis von Ammoniumcarbamat, Dissertation, TU Kaiserslautern, 2005). Der Ammoniak kann über die Eindosiervorrichtung als solches oder in Form einer Verbindung in den Abgasstrom eingebracht werden, aus der bei den Umgebungsbedingungen Ammoniak gebildet wird. Als solche kommen beispielsweise wässrige Lösungen von Harnstoff oder Ammoniumformiat in Frage, ebenso wie festes Ammoniumcarbamat. In der Regel wird das Reduktionsmittel bzw. ein Vorläufer davon in einem mitgeführten Behälter, der mit der Einspritzvorrichtung verbunden ist, vorrätig gehalten.

Der SCR-Katalysator liegt bevorzugt in Form einer Beschichtung auf einem Tragkörper vor, der ein Durchflusssubstrat oder ein Wandflussfilter sein und beispielsweise aus Silicium-Carbid, Aluminium-Titanat oder Cordierit bestehen kann.
Ein Wandflussfilter ist ein Tragkörper, der Kanäle der Länge L umfasst, die durch poröse Wände getrennt sind und sich parallel zwischen einem ersten und einem zweiten Ende des Wandflussfilters erstrecken, die aber im Gegensatz zu einem Durchflusssubstrat abwechselnd entweder am ersten oder am zweiten Ende verschlossen sind und. Wandflussfilter weisen in unbeschichtetem Zustand beispielsweise Porositäten von 30 bis 80, insbesondere 50 bis 75% auf. Ihre durchschnittliche Porengröße beträgt in unbeschichtetem Zustand beispielsweise 5 bis 30 Mikrometer.
In der Regel sind die Poren des Wandflussfilters sogenannte offene Poren, das heißt sie haben eine Verbindung zur den Kanälen. Des Weiteren sind die Poren in der Regel untereinander verbunden. Dies ermöglicht einerseits die leichte Beschichtung der inneren Porenoberflächen und andererseits eine leichte Passage des Abgases durch die porösen Wände des Wandflussfilters.

Als Tragkörper für den SCR-Katalysator können auch die bereits oben beschriebenen Trägersubstrate aus gewellten Blättern verwendet werden.

Alternativ kann aber auch der Tragkörper selbst aus dem SCR-Katalysator und einer Matrixkomponente bestehen, also in extrudierter Form vorliegen. Zu Herstellung extrudierter Tragkörper wird eine Mischung aus beispielsweise 10 bis 95 Gew.-% inerter Matrixkomponente und 5 bis 90 Gew.-% katalytisch aktiven Materials nach an sich bekannten Verfahren extrudiert. Als Matrixkomponenten können dabei alle auch sonst zur Herstellung von Katalysatorsubstraten verwendeten inerten Materialien verwendet werden. Es handelt sich dabei beispielsweise um Silikate, Oxide, Nitride oder Carbide, wobei insbesondere Magnesium-Aluminium-Silikate bevorzugt sind.

In einer weiteren Ausführungsform der erfindungsgemäßen Katalysatoranordnung liegt ein erster Teil des SCR-Katalysators als Beschichtung auf einem Wandflussfilter und ein zweiter Teil als Beschichtung auf einem Durchflusssubstrat vor. Dabei ist der Wandflussfilter bevorzugt dem erfindungsgemäßen Katalysator benachbart.
Die SCR-Katalysatoren auf dem Wandflussfilter und auf dem Durchflusssubstrat können gleich oder verschieden sein und/oder in gleichen oder verschiedenen Mengen vorliegen.
Gegebenenfalls kann vor dem SCR-Katalysator auf dem Durchflusssubstrat eine weitere Eindosiervorrichtung für Reduktionsmittel angeordnet sein.

Um den Umsatz der Stickoxide im SCR-Katalysator zu verbessern kann es nötig sein, Ammoniak in einer Menge zu dosieren, die etwa 10 bis 20% über der an sich benötigten, das heißt stöchiometrischen Menge liegt. Dadurch wird jedoch das Risiko einer höheren Sekundäremission insbesondere durch verstärkten Ammoniak-Schlupf erhöht. Da Ammoniak schon in geringer Konzentration stechend riecht und im Nutzfahrzeugbereich gesetzlich limitiert ist, muss der Ammoniak-Schlupf minimiert werden. Zu diesem Zweck sind sogenannte Ammoniak-Sperrkatalysatoren bekannt, die zur Oxidation von durchbrechendem Ammoniak in Strömungsrichtung des Abgases hinter einem SCR-Katalysator angeordnet sind. Ammoniak-Sperrkatalysatoren in verschiedenen Ausführungsformen sind beispielsweise in US 5,120,695, EP 1 399 246 A1 und EP 0 559 021 A2 beschrieben.

In einer Ausführungsform umfasst die erfindungsgemäße Katalysatoranordnung deshalb einen Ammoniak-Sperrkatalysator, der sich an den SCR-Katalysator anschließt.

Beispielsweise umfasst der Ammoniak-Sperrkatalysator SCR-aktives Material und ein oder mehrere Platingruppenmetalle, insbesondere Platin oder Platin und Palladium. Als SCR-katalytisch aktives Material kommen insbesondere alle oben beschriebenen SCR-Katalysatoren in Frage.

Die vorliegende Erfindung betrifft auch ein Verfahren zur Reinigung von Abgasen von Kraftfahrzeugen, die mit mager betriebenen Motoren, etwa Dieselmotoren, betrieben werden, das dadurch gekennzeichnet ist, dass das Abgas über ein erfindungsgemäßes Abgassystem geleitet wird und dabei so geführt wird, dass zuerst durch den erfindungsgemäßen Katalysator, dann durch den SCR-Katalysator und dann durch den Ammoniak-Sperrkatalysator fließt.

## Patentansprüche

1. Katalysator, der ein Trägersubstrat der Länge L, die sich zwischen einer ersten Stirnfläche a und einer zweiten Stirnfläche b erstreckt, sowie unterschiedlich zusammengesetzte katalytisch aktive Materialzonen A, B und C umfasst, wobei
- Materialzone A Palladium oder Palladium und Platin mit einem Gewichtsverhältnis von Pd : Pt > 1, sowie Ceroxid umfasst,
- Materialzone B Platin oder Platin und Palladium mit einem Gewichtsverhältnis von Pt : Pd > 1, sowie Ceroxid und/oder Cer/Zirkonium-Mischoxid umfasst und
- Materialzone C Platin oder Platin und Palladium mit einem Gewichtsverhältnis von Pt : Pd > 1, sowie ein Trägeroxid umfasst und
wobei
- Materialzone B über Materialzone A angeordnet ist und
- Materialzone C über Materialzone B angeordnet ist und sich ausgehend von der zweiten Stirnfläche b des Trägersubstrats auf einer Länge von 20 bis 60 % der Länge L erstreckt.

2. Katalysator gemäß Anspruch 1, **dadurch gekennzeichnet, dass** Materialzone A Palladium und kein Platin umfasst.

3. Katalysator gemäß Anspruch 1, **dadurch gekennzeichnet, dass** Materialzone A Palladium und Platin im Gewichtsverhältnis Pd : Pt von 20 : 1 bis 1,1 : 1 umfasst.

4. Katalysator gemäß einem oder mehreren der Ansprüche 1 bis 3, **dadurch gekennzeichnet, dass** Materialzone A ein Erdalkalioxid enthält.

5. Katalysator gemäß Anspruch 4, **dadurch gekennzeichnet, dass** das Erdalkalioxid Magnesiumoxid, Strontiumoxid oder Bariumoxid ist.

6. Katalysator gemäß einem oder mehreren der Ansprüche 1 bis 5, **dadurch gekennzeichnet, dass** Materialzone B Platin und kein Palladium umfasst.

7. Katalysator gemäß einem oder mehreren der Ansprüche 1 bis 5, **dadurch gekennzeichnet, dass** Materialzone B Platin und Palladium im Gewichtsverhältnis Pt : Pd von 20 : 1 bis 1,1 : 1 umfasst.

8. Katalysator gemäß einem oder mehreren der Ansprüche 1 bis 7, **dadurch gekennzeichnet, dass** Materialzone C Platin und kein Palladium umfasst.

9. Katalysator gemäß einem oder mehreren der Ansprüche 1 bis 7, **dadurch gekennzeichnet, dass** Materialzone C Platin und Palladium im Gewichtsverhältnis Pt : Pd von 20 : 1 bis 1,1 : 1 umfasst.

10. Katalysator gemäß einem oder mehreren der Ansprüche 1 bis 9, **dadurch gekennzeichnet, dass** sich sowohl Materialzone A, als auch Materialzone B zwischen den Stirnflächen a und b auf der ganzen Länge L des Tragkörpers erstrecken

11. Katalysator gemäß einem oder mehreren der Ansprüche 1 bis 10, **dadurch gekennzeichnet, dass** Materialzone A direkt auf dem Tragkörper, Materialzone B direkt auf Materialzone A und Materialzone C direkt auf Materialzone B liegt.

12. Katalysatoranordnung, die
a) einen Katalysator, der ein Trägersubstrat der Länge L, die sich zwischen einer ersten Stirnfläche a und einer zweiten Stirnfläche b erstreckt, sowie unterschiedlich zusammengesetzte katalytisch aktive Materialzonen A, B und C umfasst, wobei
- Materialzone A Palladium oder Palladium und Platin mit einem Gewichtsverhältnis von Pd : Pt > 1, sowie Ceroxid umfasst,
- Materialzone B Platin oder Platin und Palladium mit einem Gewichtsverhältnis von Pt : Pd > 1, sowie Ceroxid und/oder Cer/Zirkonium-Mischoxid umfasst und
- Materialzone C Platin oder Platin und Palladium mit einem Gewichtsverhältnis von Pt : Pd > 1, sowie ein Trägeroxid umfasst und
wobei
- Materialzone B über Materialzone A angeordnet ist und
- Materialzone C über Materialzone B angeordnet ist und sich ausgehend von der zweiten Stirnfläche b des Trägersubstrats auf einer Länge von 20 bis 60 % der Länge L erstreckt.
und
b) einen SCR-Katalysator
umfasst.

13. Katalysatoranordnung gemäß Anspruch 12, **dadurch gekennzeichnet, dass** der SCR-Katalysator ein Zeolith ist, der dem Gerüsttyp BEA, AEI, CHA, KFI, ERI, LEV, MER oder DDR angehört und der mit Kobalt, Eisen, Kupfer oder Mischungen aus zwei oder drei dieser Metalle ausgetauscht ist.

14. Katalysatoranordnung gemäß Anspruch 12 und/oder 13, **dadurch gekennzeichnet, dass** ein erster Teil des SCR-Katalysators als Beschichtung auf einem Wandflussfilter und ein zweiter Teil als Beschichtung auf einem Durchflusssubstrat vorliegt, wobei der Wandflussfilter dem Katalysator gemäß einem oder mehreren der Ansprüche 1 bis 11 benachbart ist.

15. Katalysatoranordnung gemäß einem oder mehreren der Ansprüche 12 bis 14, **dadurch gekennzeichnet, dass** sie einen Ammoniak-Sperrkatalysator umfasst, der sich an den SCR-Katalysator anschließt.

16. Verfahren zur Reinigung von Abgasen von Kraftfahrzeugen, die mit mager betriebenen Motoren betrieben werden, **dadurch gekennzeichnet, dass** das Abgas über eine Katalysatoranordnung gemäß einem oder mehreren der Ansprüche 12 bis 15 geleitet wird, wobei das Abgas so geführt wird, dass es zuerst durch den Katalysator gemäß einem oder mehreren der Ansprüche 1 bis 11, dann durch den SCR-Katalysator und dann durch den Ammoniak-Sperrkatalysator fließt.
